(19) Europäisches Patentamt
European Patent Office
Office européen des brevets

(11) **EP 2 659 975 A1**

(12) **EUROPEAN PATENT APPLICATION**
published in accordance with Art. 153(4) EPC

(43) Date of publication:
**06.11.2013 Bulletin 2013/45**

(21) Application number: **11853414.8**

(22) Date of filing: **26.12.2011**

(51) Int Cl.:
*B01J 29/85* (2006.01)     *B01D 53/94* (2006.01)
*B01J 37/00* (2006.01)     *B01J 37/02* (2006.01)
*F01N 3/08* (2006.01)     *F01N 3/10* (2006.01)
*F01N 3/28* (2006.01)

(86) International application number:
**PCT/JP2011/080038**

(87) International publication number:
**WO 2012/090922 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2010  JP 2010289421**

(71) Applicant: **MITSUBISHI PLASTICS, INC.**
**Chiyoda-ku,**
**Tokyo 100-8252 (JP)**

(72) Inventors:
• **MATSUO, Takeshi**
**Yokohama-shi**
**Kanagawa 227-8502 (JP)**
• **TAKEWAKI, Takahiko**
**Yokohama-shi**
**Kanagawa 227-8502 (JP)**

• **OSHIMA, Kazunori**
**Yokohama-shi**
**Kanagawa 227-8502 (JP)**
• **CHEN, Haijun**
**Yokohama-shi**
**Kanagawa 227-8502 (JP)**
• **NISHIOKA, Daisuke**
**Yokohama-shi**
**Kanagawa 227-8502 (JP)**
• **TAGUSAGAWA, Caio**
**Yokohama-shi**
**Kanagawa**
**2278502 (JP)**

(74) Representative: **HOFFMANN EITLE**
**Patent- und Rechtsanwälte**
**Arabellastrasse 4**
**81925 München (DE)**

(54) **CATALYST FOR NITROGEN OXIDE REMOVAL**

(57)     [Object] To provide a catalyst for nitrogen oxide removal having no degradation problem caused by adsorbed water when a temperature is raised sharply and exhibiting excellent nitrogen oxide removal performance and retentive characteristic thereof.

[Solution] A catalyst for nitrogen oxide removal, containing a metal-loading zeolite, wherein the zeolite contains a silicon atom, an aluminum atom, and a phosphorus atom in a framework structure, and the amount of water adsorption of the catalyst at 25°C and a relative vapor pressure of 0.5 is 0.05 to 0.2 (kg-water/kg-catalyst) or less. A method for manufacturing this catalyst for nitrogen oxide removal, the method including the steps of drying a mixed slurry containing a metal source, the zeolite, and metal oxide particles having an average particle diameter of 0.1 to 10 μm and/or an inorganic binder and calcining the resulting dry powder.

Fig.1

**Description**

Field of Invention

The present invention relates to a catalyst for nitrogen oxide removal. In particular, the present invention relates to a zeolite-containing catalyst (hereafter may be simply referred to as "zeolite catalyst") capable of efficiently decomposing and removing nitrogen oxides contained in an exhaust gas discharged from an internal combustion engine, e.g., a diesel engine, and a method for manufacturing this zeolite catalyst efficiently.
Also, the present invention relates to a device for nitrogen oxide removal by using this zeolite catalyst.
In this regard, in the present invention, the term "nitrogen oxide removal" refers to reduce nitrogen oxides to nitrogen and water.

Background of Invention

Nitrogen oxides contained in an exhaust gas from an internal combustion engine, a factory exhaust gas, and the like have been removed by selective catalytic reduction (SCR) through the use of a $V_2O_5$-$TiO_2$ catalyst and ammonia previously. However, the $V_2O_5$-$TiO_2$ catalyst may sublimate at high temperatures and catalyst components may be discharged into an exhaust gas and, therefore, is not suitable for exhaust gas cleaning of especially mobile units, e.g., automobiles.
Then, in recent years, a zeolite catalyst carrying a metal has been proposed as a SCR catalyst in an exhaust gas treatment of an automobile, especially a diesel car, where it is difficult to remove nitrogen oxides.
In particular, it is known that a catalyst in which a metal is loaded on silico-aluminophosphate (hereafter may be referred to as "SAPO") serving as zeolite containing silicon, aluminum, and phosphorus atoms in a framework becomes a catalyst highly active in removing nitrogen oxides, and a catalyst in which a metal is loaded on a zeolite having an eight-membered ring structure has been proposed (see Non Patent Document 1, Patent Document 1 to Patent Document 6, and the like).

List of Documents

Patent Document 1: Japanese Patent Publication H2-251246A(JP1990-251246A)
Patent Document 2: Japanese Patent Publication H11-147041A(JP1999-147041A)
Patent Document 3: International Publication WO 2008/118434
Patent Document 4: International Publication WO 2008/132452
Patent Document 5: International Publication WO 2009/099937
Patent Document 6: International Publication WO 2010/084930

Non Patent Document 1: Ishihara, et. al, Journal of catalysis 169, 93-102 (1997)

Object and Summary of Invention

Problem to be solved by the invention

In the case where such an SCR catalyst is used as a catalyst for nitrogen oxide removal of an automobile exhaust gas, there are problems as described below.
That is, when an engine is started from a state in which the engine is stopped, an exhaust gas at 100°C to 150°C passes on the catalyst. When the engine is in the state of being stopped, the catalyst adsorbs water having a weight 0.3 to 0.4 times the weight of the catalyst from the air. In the case where an exhaust gas at 100°C to 150°C is suddenly passed on the catalyst which have adsorbed water as described above, the temperature on the catalyst is raised sharply, and the adsorbed water is desorbed all at once, so that the humidity becomes very high locally, and significant degradation in nitrogen oxide decomposition performance may occur temporarily. In addition, the catalyst may be damaged significantly by being exposed to the high-humidity atmosphere and be degraded, so that a large problem occurs in practice.
It is an object of the present invention to provide a zeolite catalyst having no degradation problem caused by adsorbed water when a temperature is raised sharply and exhibiting excellent nitrogen oxide removal performance and a retentive characteristic thereof.

Means for solving problem

In order to solve the above-described problems, the present inventors performed intensive studies over and over again, and considered to solve the above-described problems by decreasing the amount of water adsorption of the catalyst.

Meanwhile, in the case where the zeolite ratio in the catalyst is decreased in order to decrease the amount of water adsorption of the catalyst, the nitrogen oxide removal performance is degraded correspondingly. The present invention provides a catalyst for nitrogen oxide removal and a device for nitrogen oxide removal, where an influence of humidity due to adsorbed water is minimized and a nitrogen oxide removal performance is high, and a method for simply efficiently manufacturing this catalyst for nitrogen oxide removal.

That is, the gist of the present invention is as described below.

[1] A catalyst for nitrogen oxide removal, comprising a zeolite and a metal loaded thereon, wherein the zeolite contains at least a silicon atom, an aluminum atom, and a phosphorus atom in a framework structure, and wherein the amount of water adsorption of the catalyst at 25°C and a relative vapor pressure of 0.5 is 0.05 (kg-water/kg-catalyst) or more and 0.2 (kg-water/kg-catalyst) or less.

[2] A catalyst for nitrogen oxide removal, comprising a zeolite and a metal loaded thereon, the zeolite having a framework structure which contains at least a silicon atom, an aluminum atom, and a phosphorus atom,

wherein when an X-ray diffraction measurement by using Cu-K$\alpha$ rays as an X-ray source is performed, the ratio of a diffraction peak intensity observed in the range of diffraction angle (2$\theta$) of 21.0 degrees or more and 21.4 degrees or less to a diffraction peak intensity observed in the range of 20.4 degrees or more and 20.8 degrees or less is 0.2 or more and 1.2 or less.

[3] The catalyst for nitrogen oxide removal, according to [1] or [2], wherein Si/(Si + Al + P) (molar ratio) in the framework structure of the zeolite is 0.10 or more.

[4] The catalyst for nitrogen oxide removal, according to any one of [1] to [3], wherein the amount of $NH_3$ adsorption measured by the following method is 0.28 mmol/g-catalyst or more.

<Method for measuring amount of $NH_3$ adsorption>

The catalyst is allowed to adsorb ammonia at 200°C until saturation is reached and, thereafter, Gas 1 shown in Table 5 described below is passed to bring about an equilibrium state of a reduction reaction of NO by ammonia. Subsequently, the amount of $NH_3$ adsorption (mmol/g-catalyst) is determined from a total amount of NO reduced when Gas 2 is passed on the basis of the following formula.

$$\text{amount of } NH_3 \text{ adsorption} = \text{total amount of NO/catalyst weight (g)}$$

[Table 1]

|  | Gas 1 | Gas 2 |
|---|---|---|
| NO | 350ppm | 350ppm |
| $NH_3$ | 385ppm | 0 |
| $O_2$ | 15 percent by volume | 15 percent by volume |
| $H_2O$ | 5 percent by volume | 5 percent by volume |
| $N_2$ | part other than the above-described components | part other than the above-described components |

[5] The catalyst for nitrogen oxide removal, according to any one of [1] to [4], wherein the catalyst comprises mental oxide particles having an average particle diameter of 0.1 to 10 $\mu$m and/or an inorganic binder.

[6] The catalyst for nitrogen oxide removal, according to [5], wherein the catalyst comprises metal oxide particles having an average particle diameter of 0.1 to 10 $\mu$m and an inorganic binder.

[7] The catalyst for nitrogen oxide removal, according to any one of [1] to [6], wherein the catalyst comprises the zeolite in an amount of 30 to 99 percent by weight.

[8] The catalyst for nitrogen oxide removal, according to any one of [1] to [7], wherein the zeolite has a structure of CHA on the cord defined by IZA.

[9] The catalyst for nitrogen oxide removal, according to any one of [1] to [8], wherein the loaded metal is copper and/or iron.

[10] The catalyst for nitrogen oxide removal, according to any one of [5] to [9], wherein the metal of the metal oxide is at least one selected from the group consisting of aluminum, silicon, titanium, cerium, and niobium.

[11] The catalyst for nitrogen oxide removal, according to any one of [5] to [10], wherein the inorganic binder is an aggregate of inorganic oxide sols having an average particle diameter of 5 to 100 nm.

[12] A device for nitrogen oxide removal, comprising a honeycomb-shaped product, and the catalyst for nitrogen oxide removal according to any one of [1] to [11] coated on the product.

[13] A device for nitrogen oxide removal being formed by molding the catalyst for nitrogen oxide removal according to any one of [1] to [11].

[14] A method for manufacturing a catalyst for nitrogen oxide removal, the catalyst comprising a zeolite and a metal loaded thereon, wherein the method comprises a step of preparing dry powder by drying a mixed slurry containing a metal source, the zeolite, and metal oxide particles having an average particle diameter of 0.1 to 10 $\mu$m and/or an inorganic binder, and a step of calcining the dry powder.

[15] The method for manufacturing a catalyst for nitrogen oxide removal according to [14], wherein the dry powder is calcined at a temperature of 400°C or higher in the calcining step.

Advantageous Effects of Invention

According to the present invention, a catalyst for nitrogen oxide removal having no degradation problem caused by desorbing of adsorbed water along with a sharp increase in temperature and exhibiting excellent nitrogen oxide removal performance and maintenance characteristic thereof and a device for nitrogen oxide removal by using this catalyst for nitrogen oxide removal are provided.

According to the method for manufacturing a catalyst for nitrogen oxide removal of the present invention, such a catalyst for nitrogen oxide removal can be simply efficiently produced.

Brief Description of Drawing

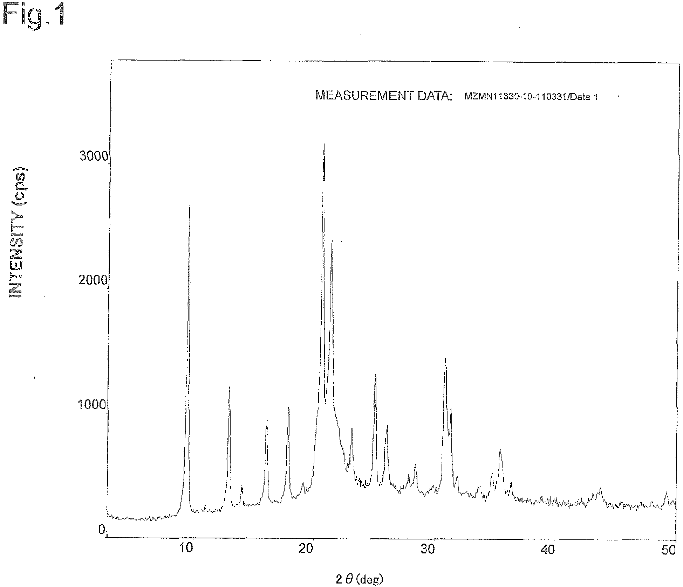

Fig. 1 is an X-ray diffraction measurement chart of Catalyst 5 produced in Example 5.

Description of Embodiments

The embodiments according to the present invention will be described below in detail.

[Catalyst for nitrogen oxide removal]

A catalyst for nitrogen oxide removal according to the present invention (hereafter may be simply referred to as "catalyst according to the present invention") is a catalyst, which contains a metal-loading zeolite, for nitrogen oxide removal, wherein the zeolite contains at least a silicon (Si) atom, an aluminum (Al) atom, and a phosphorus (P) atom in a framework structure, and the amount of water adsorption of the catalyst at 25°C and a relative vapor pressure of 0.5 is 0.05 (kg-water/kg-catalyst) or more and 0.2 (kg-water/kg-catalyst) or less.

Also the catalyst according to the present invention is a catalyst for nitrogen oxide removal, characterized by being produced by allowing a zeolite containing at least a silicon (Si) atom, an aluminum (Al) atom, and a phosphorus (P) atom in a framework structure to carry a metal, wherein when an X-ray diffraction measurement is performed by a method described later, the ratio of a diffraction peak intensity observed in the range of diffraction angle ($2\theta$) of 21.0 degrees or more and 21.4 degrees or less to a diffraction peak intensity observed in the range of 20.4 degrees or more and 20.8 degrees or less is 0.2 or more and 1.2 or less.

In particular, it is preferable that the amount of $NH_3$ adsorption, measured by the following method, of the catalyst according to the present invention be 0.28 mmol/g-catalyst or more.

{Zeolite}

<Constituent atoms>

The zeolite used in the present invention is a zeolite contains at least a silicon atom, an aluminum atom, and a phosphorus atom in a framework structure (hereafter may be simply referred to as "zeolite").

It is preferable that abundances of silicon atom, aluminum atom, and phosphorus atom in the framework structure of the zeolite used in the present invention satisfy Formulae (I), (II), and (III) described below.

$$0.05 \leq x1 \leq 0.25 \qquad (I)$$

In Formula, $x1$ represents a molar ratio of silicon atom to a total of silicon atom, aluminum atom, and phosphorus atom in the framework structure.

$$0.3 \leq y1 \leq 0.6 \qquad (II)$$

In Formula, $y1$ represents a molar ratio of aluminum atom to a total of silicon atom, aluminum atom, and phosphorus atom in the framework structure.

$$0.3 \leq z1 \leq 0.6 \qquad (III)$$

In Formula, $z1$ represents a molar ratio of phosphorus atom to a total of silicon atom, aluminum atom, and phosphorus atom in the framework structure.

$x1$ is preferably 0.06 or more, more preferably 0.07 or more, further preferably 0.075 or more, and especially preferably 0.10 or more, and preferably 0.20 or less, more preferably 0.18 or less, and further preferably 0.16 or less. $y1$ is preferably 0.35 or more, and more preferably 0.40 or more, and preferably 0.55 or less. $z1$ is preferably 0.35 or more, and more preferably 0.40 or more, and preferably 0.55 or less.

Atoms other than the silicon atom, the aluminum atom, and the phosphorus atom may be contained in the framework structure of the zeolite in the present invention. Examples of the other atoms, which may be contained, include at least one atom of lithium, magnesium, titanium, zirconium, vanadium, chromium, manganese, iron, cobalt, nickel, palladium, copper, zinc, gallium, germanium, arsenic, tin, calcium, and boron. Preferable examples include an iron atom, a copper atom, and a gallium atom.

The content of these other atoms in the framework structure of the zeolite is preferably 0.3 or less, and further preferably 0.1 or less on a molar ratio relative to a total of the silicon atom, the aluminum atom, and the phosphorus atom basis.

The above-described proportion of the atom in the framework structure of the zeolite is determined by element analysis. As for the element analysis in the present invention, a sample is heated and dissolved into a hydrochloric acid aqueous solution and, thereafter, identification is performed on the basis of inductively coupled plasma (ICP) emission spectrochemical analysis.

<framework structure>

The zeolite is usually crystalline and has a regular network structure in which methane type $SiO_4$ tetrahedron, $AlO_4$ tetrahedron, or $PO_4$ tetrahedron (hereafter they are generically referred to as "$TO_4$", and a contained atom other than an oxygen atom is referred to as T atom) are bonded sharing the individual vertex oxygen atoms. As for the T atom, atoms other than Al, P, and Si have been known. One of basic units of the network structure is a so-called eight-membered ring in which eight $TO_4$ tetrahedrons are joined into the shape of a ring. Likewise, a six-membered ring, a ten-membered ring, and the like become basic units of the zeolite structure.

The structure of the zeolite in the present invention is determined by X-ray diffraction (hereafter referred to as XRD).

The structure of the zeolite in the present invention is preferably indicated by any one of AEI, AFR, AFS, AFT, AFX, AFY, AHT, CHA, DFO, ERI, FAU, GIS, LEV, LTA, and VFI, which are cords defined by International Zeolite Association (IZA), and any one of AEI, AFX, GIS, CHA, VFI, AFS, LTA, FAU, and AFY is further preferable. A zeolite having a CHA structure is most preferable because hydrocarbons derived from fuels are not adsorbed easily.

The framework densities of zeolites in the present invention are not specifically limited, but are usually 13.0 $T/nm^3$ or more, preferably 13.5 $T/nm^3$ or more, and more preferably 14.0 $T/nm^3$ or more, and usually 20.0 $T/nm^3$ or less, preferably 19.0 $T/nm^3$ or less, and more preferably 17.5 $T/nm^3$ or less. In this regard, the framework density ($T/nm^3$) refers to the number of T atoms (atoms (T atoms) constituting the framework structure of the zeolite, besides the oxygen atom) present in a unit volume $nm^3$ of the zeolite, and this value is determined on the basis of the structure of the zeolite. If the framework density of the zeolite is less than the above-described lower limit value, the structure may become unstable and the structural durability tends to be degraded. On the other hand, if the above-described upper limit value is exceeded, the amount of adsorption and the catalyst activity may be reduced and be unsuitable for use as a catalyst.

<Amount of water adsorption>

The amount of water adsorption of the zeolite used in the present invention at a relative vapor pressure of 0.5 is preferably 0.25 to 0.35 (kg-water/kg-zeolite) with respect to a water vapor adsorption isotherm at 25°C.

Preferably, the zeolite in the present invention has a feature, in which the amount of water adsorption varies significantly in a specific region of the relative vapor pressure, as a water vapor adsorption characteristic. According to the evaluation on the basis of the adsorption isotherm, with respect to the water vapor adsorption isotherm at 25°C, when a relative vapor pressure is changed by 0.05 in the relative vapor pressure range of 0.03 or more and 0.25 or less, the change in the amount of water adsorption is preferably 0.05 (kg-water/kg-zeolite) or more, and more preferably 0.10 (kg-water/kg-zeolite) or more. In this regard, a larger change in the amount of water adsorption is preferable because a difference in the amount of adsorption is large. However, the change is usually 1.0 (kg-water/kg-zeolite) or less.

The range of the relative vapor pressure showing the above-described change in the amount of adsorption is preferably 0.035 or more and 0.15 or less, and further preferably 0.04 or more and 0.09 or less.

This amount of water adsorption of the zeolite is measured as with the amount of water adsorption of the catalyst according to the present invention, as described below.

<Particle diameter>

The particle diameter of the zeolite in the present invention is not specifically limited and is usually 1 $\mu$m or more, further preferably 2 $\mu$m or more, and more preferably 3 $\mu$m or more, usually 15 $\mu$m or less, and preferably 10 $\mu$m or less.

The particle diameter of the zeolite in the present invention refers to a value measured as a particle diameter after templates are removed in production of the zeolite, as described below. Also, this particle diameter refers to an average value of primary particle diameters of zeolite particles at randomly chosen 10 to 30 points, where the zeolite is observed by an electron microscope.

[Method for manufacturing zeolite]

The zeolite in itself in the present invention is a known compound and can be produced in conformity with a commonly used method.

The method for manufacturing the zeolite in the present invention is not specifically limited. Production can be performed in conformity with the methods described in, for example, Japanese Patent Publication 2003-183020A, International Publication WO 2010/084930, Japanese Patent Publication H4-37007A (1990-37007A), Japanese Patent Publication H5-21844B (1993-21844B), Japanese Patent Publication H5-51533B (1993-51533B), and U.S. Patent 4440871.

The zeolite used in the present invention is usually obtained by mixing an aluminum atom raw material, a phosphorus atom raw material, a silicon atom raw material, and templates, as necessary, and thereafter, inducing hydrothermal synthesis. In the case where the templates are mixed, an operation to remove the templates is performed after the hydrothermal synthesis.

<Aluminum atom raw material>

The aluminum atom raw material for the zeolite in the present invention is not specifically limited. Examples usually include aluminum alkoxide, e.g., pseudo-boehmite, aluminum isopropoxide, and aluminum triethoxide, aluminum hydroxide, alumina sol, and sodium aluminate. One of them may be used alone, or at least two may be used in combination. Pseudo-boehmite is preferable as an aluminum source from the viewpoints of ease in handling and high reactivity.

<phosphorus atom raw material>

The phosphorus atom raw material for the zeolite in the present invention is usually phosphoric acid, although aluminum phosphate may be used. One of phosphorus atom raw materials may be used alone, or at least two may be used in combination.

<Silicon atom raw material>

The silicon atom raw material for the zeolite in the present invention is not specifically limited. Examples usually include fumed silica, silica sol, colloidal silica, water glass, ethyl silicate, and methyl silicate. One of them may be used alone, or at least two may be used in combination. Fumed silica is preferable from the viewpoints of high purity and high reactivity.

<Template>

As for the template used for producing the zeolite according to the present invention, various templates, which are used by known methods, can be used. It is preferable that at least one compound selected from (1) a group of alicyclic heterocyclic compounds containing a nitrogen atom as a heteroatom and at least one compound selected from (2) a group of alkylamines may be used.

(1) Alicyclic heterocyclic compound containing nitrogen atom as heteroatom

An alicyclic heterocyclic compound containing a nitrogen atom as a heteroatom is usually a five- to seven-membered ring and is preferably a six-membered ring. The number of heteroatoms contained in the heterocyclic ring is usually 3 or less, and preferably 2 or less. Any heteroatom besides the nitrogen atom may be employed, although it is preferable that an oxygen atom be contained in addition to the nitrogen atom. The position of the heteroatom is not specifically limited, although it is preferable that heteroatoms do not adjoin each other.
The molecular weight of the alicyclic heterocyclic compound containing a nitrogen atom as a heteroatom is usually 250 or less, preferably 200 or less, and further preferably 150 or less, and usually 30 or more, preferably 40 or more, and further preferably 50 or more.
Examples of such alicyclic heterocyclic compounds containing a nitrogen atom as a heteroatom include morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, pyrrolidone, N-methylpyrrolidone, and hexamethyleneimine. One of them may be used alone, or at least two may be used in combination. Among them, morpholine, hexamethyleneimine, and piperidine are preferable, and morpholine is especially preferable.

(2) Alkylamine

The alkyl group in alkylamine is usually a chain alkyl group. The number of alkyl groups included in one molecule of amine is not specifically limited, although 3 is preferable.
Part of alkyl groups of alkylamine may include substituents, e.g., a hydroxyl group.
The carbon number of the alkyl group of alkylamine is preferably 4 or less, and the total of the carbon numbers of alkyl groups in one molecule is more preferably 10 or less.
The molecular weight of the alkylamine is usually 250 or less, preferably 200 or less, and further preferably, 150 or less.
Examples of such alkylamines include di-n-propylamine, tri-n-propylamine, tri-isopropylamine, triethylamine, triethanolamine, N,N-diethylethanolamine, N,N-dimethylethanolamine, N-methyldiethanolamine, N-methylethanolamine, di-n-butylamine, neopentylamine, di-n-pentylamine, isopropylamine, t-butylamine, ethylenediamine, di-isopropyl-ethylamine, and N-methyl-n-butylamine. One of them may be used alone, or at least two may be used in combination. Among them, di-n-propylamine, tri-n-propylamine, tri-isopropylamine, triethylamine, di-n-butylamine, isopropylamine, t-butylamine, ethylenediamine, di-isopropyl-ethylamine, and N-methyl-n-butylamine are preferable, and triethylamine is especially preferable.
A preferable combination of the templates of the above-described items (1) and (2) is a combination containing morpholine and triethylamine.
It is necessary that mixing ratio of the templates is selected in accordance with the condition.
In the case where two templates are used by mixing, the molar ratio of two templates to be mixed is usually 1:20 to 20:1, preferably 1:10 to 10:1, and further preferably 1:5 to 5:1.
In the case where three templates are used by mixing, the molar ratio of a third template to the total of the two templates of the items (1) and (2), which are mixed, as described above, is usually 1:20 to 20:1, preferably 1:10 to 10:1, and further preferably 1:5 to 5:1.

The mixing ratio of at least two templates is not specifically limited and can be selected in accordance with the condition. For examples, in the case where morpholine and triethylamine are used, the molar ratio of morpholine/triethylamine is usually 0.05 or more, preferably 0.1 or more, and further preferably 0.2 or more, and usually 20 or less, preferably 10 or less, and further preferably 5 or less.

The templates may include templates other than those in the above-described items (1) and (2). The molar ratio of the other templates relative to the whole templates is usually 20% or less, and preferably 10% or less.

When the templates are used in production of SAPO which is the zeolite used in the present invention, the Si content in the resulting SAPO can be controlled, so that favorable Si content and state of presence of Si for the use as the catalyst for nitrogen oxide removal can be brought about. The reason therefor is not certain, although the following is estimated.

For example, in the case where SAPO having a CHA structure is synthesized, when (1) an alicyclic heterocyclic compound containing a nitrogen atom as a heteroatom, for example, morpholine, is used as a template, SAPO having a large Si content can be synthesized relatively easily. However, if synthesis of SAPO having a small Si content is intended, crystallization becomes difficult because there are many dense components and amorphous components. On the other hand, if (2) an alkylamine, for example, triethylamine, is used as a template, SAPO having the CHA structure can be synthesized under a limited condition, although various types of SAPO having various structures are present together easily. However, conversely, a component having a crystalline structure, which is not a dense component and an amorphous component, is produced easily. That is, the individual templates in the above-described items (1) and (2) have a characteristic to lead to the CHA structure, a characteristic to facilitate crystallization of SAPO, and the like. It is believed that these characteristics are combined and, thereby, a synergistic effect can be exerted, so as to obtain an effect which cannot be realized by the template of the item (1) or (2) alone.

<Synthesis of zeolite by hydrothermal synthesis>

In production of the zeolite used in the present invention, initially, the above-described silicon atom raw material, aluminum atom raw material, phosphorus atom raw material, templates, and water are mixed so as to prepare an aqueous gel. The order of mixing thereof is not specifically limited and may be selected appropriately in accordance with the condition employed. Usually, the phosphorus atom raw material and the aluminum atom raw material are initially mixed with water, and the silicon atom raw material and the templates are mixed with them.

The order of mixing of the templates is not specifically limited, where at least one template is selected from each of the two groups of the above-described items (1) and (2). The templates may be mixed with other substances after being prepared, or each template may be independently mixed with other substances.

A preferable composition of the aqueous gel is as described below.

That is, in the case where the silicon atom raw material, the aluminum atom raw material, and the phosphorus atom raw material are represented by molar ratios in terms of their respective oxides, the value of $SiO_2/Al_2O_3$ is usually larger than 0, and preferably 0.02 or more, and usually 0.5 or less, preferably 0.4 or less, and further preferably 0.3 or less. Also, the value of $P_2O_5/Al_2O_3$ on the same basis is usually 0.6 or more, preferably 0.7 or more, and further preferably 0.8 or more, and usually 1.3 or less, preferably 1.2 or less, and further preferably 1.1 or less.

The composition of the zeolite obtained by hydrothermal synthesis is in correlation with the composition of the aqueous gel and, therefore, in order to obtain a zeolite having a predetermined composition, the composition of the aqueous gel may be specified appropriately within the above-described range.

The total amount of templates is usually 0.2 or more, preferably 0.5 or more, and further preferably 1 or more, and usually 4 or less, preferably 3 or less, and further preferably 2.5 or less on a molar ratio of template to $Al_2O_3$ basis, where the aluminum atom raw material in the aqueous gel is represented by an oxide. If the usage of the templates is more than or equal to the above-described lower limit, the amount of templates becomes sufficient, and if the usage is less than or equal to the above-described upper limit, an alkali concentration can be decreased. Therefore, good crystallization can be induced by the usage being within the above-described range.

The proportion of water in the aqueous gel is usually 3 or more, preferably 5 or more, and further preferably 10 or more, and usually 200 or less, preferably 150 or less, and further preferably 120 or less on a molar ratio of water to $Al_2O_3$ basis, where the aluminum atom raw material in the aqueous gel is represented by an oxide, from the viewpoints of ease in synthesis and high productivity.

The pH of the aqueous gel is usually 5 or more, preferably 6 or more, and further preferably 6.5 or more, and usually 10 or less, preferably 9 or less, and further preferably 8.5 or less.

Components other than those described above may be contained in the aqueous gel, if desired. Examples of such components include hydroxides and salts of alkali metals and alkaline earth metals and hydrophilic organic solvents, e.g., alcohol. The contents of these other components in the aqueous gel is usually 0.2 or less, and preferably 0.1 or less on a molar ratio relative to $Al_2O_3$ basis, where the aluminum atom raw material is represented by an oxide, as for alkali metals and alkaline earth metals, and usually 0.5 or less, and preferably 0.3 or less on a molar ratio relative to water in the aqueous gel basis as for hydrophilic organic solvents, e.g., alcohol.

The hydrothermal synthesis is induced by putting the above-described aqueous gel into a pressure-resistant container and keeping a predetermined temperature in an agitation or standing state under a self-generated pressure or a gas pressure at such a degree that crystallization is not hindered. The reaction temperature in the hydrothermal synthesis is usually 100°C or higher, preferably 120°C or higher, and further preferably 150°C or higher, and usually 300°C or lower, preferably 250°C or lower, and further preferably 220°C or lower. In the process of temperature raising up to a maximum ultimate temperature which is the highest temperature in this temperature range, holding in a temperature range of 80°C to 120°C for 1 hour or more is preferable, and holding for 2 hours or more is more preferable.

If the temperature raising time in this temperature range is less than 1 hour, the durability of a zeolite obtained by calcining the resulting template-containing zeolite may become insufficient. In this regard, holding in a temperature range of 80°C to 120°C for 1 hour or more is preferable from the viewpoint of the durability of the resulting zeolite.

The upper limit of the temperature raising time in this temperature range is not specifically specified, but is usually 50 hours or less, and preferably 24 hours or less from the viewpoint of production efficiency because if too long, inconvenience may occur from the viewpoint of production efficiency.

The method for raising a temperature in the above-described temperature range is not specifically limited. Various methods can be used, and examples include a method based on monotonous raising, a method based on stepwise change, a method based on vertical change e.g., vibration, and methods based on combinations thereof. A method in which the temperature is raised monotonously while the temperature raising rate is kept at a certain value or less is usually favorably employed because of ease in control.

It is preferable to perform keeping at the vicinity of the maximum ultimate temperature for a predetermined time in the hydrothermal synthesis. The vicinity of the maximum ultimate temperature refers to a temperature 5°C lower than that temperature to the maximum ultimate temperature. The duration of keeping at the maximum ultimate temperature has an influence on ease in synthesis of the predetermined zeolite and is usually 0.5 hours or more, preferably 3 hours or more, and further preferably 5 hours or more, and usually 30 days or less, preferably 10 days or less, and further preferably 4 days or less.

The method for changing the temperature after the maximum ultimate temperature has been reached is not specifically limited. Various methods can be used, and examples include a method based on stepwise lowering of temperature, a method based on vertical change e.g., vibration, at temperatures lower than or equal to the maximum ultimate temperature, and methods based on combinations thereof. A method in which the temperature is lowered from a temperature of 100°C to room temperature after the maximum ultimate temperature is kept is usually favorably employed from the viewpoints of ease in control and durability of the resulting zeolite.

<Template-containing zeolite

After the hydrothermal synthesis is finished, the template-containing zeolite serving as a product is separated from a hydrothermal synthesis reaction solution. The method for separating the template-containing zeolite is not specifically limited. Usually, the product can be obtained by performing separation through filtration, decantation, or the like, performing washing with water, and performing drying at a temperature lower than or equal to 150°C.

Subsequently, the templates are usually removed from the template-containing zeolite, and the method therefor is not specifically limited. Usually, organic materials (templates) contained can be removed by calcining at a temperature of 400°C to 700°C in air, or an atmosphere of an inert gas containing oxygen or an inert gas or a method of, for example, extracting with an extraction solvent, e.g., an ethanol aqueous solution or a HCl-containing ether. Preferably, removal of the template by calcining is preferable from the viewpoint of manufacturability.

In the present invention, the zeolite can also be used for loading a metal without removing the templates therefrom, as described later.

{Loaded metal}

In the catalyst according to the present invention, a metal is loaded on the above-described zeolite.

<Metal>

In the present invention, the metal loaded on the zeolite is not specifically limited insofar as the catalyst activity can be displayed while being loaded on the zeolite, and is preferably selected from the group among iron, cobalt, palladium, iridium, platinum, copper, silver, gold, cerium, lanthanum, praseodymium, titanium, zirconia, and the like. The metal loaded on the zeolite may be one of them, or at least two metals may be loaded on the zeolite in combination. Further preferably, the metal(s) loaded on the zeolite is iron and/or copper.

In the present invention, a "metal" is not necessarily limited to a metal in the state of a zero-valent element. The term "metal" includes the state of being loaded in a catalyst, for example, the state of being an ionic or other species.

<Amount of loading>

The amount of metal loaded on the zeolite in the catalyst according to the present invention is not specifically limited, and the weight ratio of the metal to the zeolite is usually 0.1% or more, preferably 0.5% or more, and further preferably 1% or more, and usually 10% or less, preferably 8% or less, and further preferably 5% or less. If the amount of metal loaded is less than or equal to the above-described lower limit value, active sites tend to decrease and catalyst performance is not delivered in some cases. If the amount of metal loaded is more than the above-described upper limit value, aggregation of the mental tends to become considerable, and the catalyst performance may be degraded in some cases.

<Method for loading metal>

The method for allowing the zeolite to carry a metal in production of the catalyst according to the present invention is not specifically limited, and commonly used ion exchange method, impregnation loading method, precipitation loading method, solid-phase ion exchange method, CVD method, and the like are employed. The ion exchange method and the impregnation loading method are preferable.

The metal source of the metal to be loaded is not specifically limited. Metal salts, metal complexes, metal simple substances, metal oxides, and the like are used. Usually, salts of a loaded metal are used and, for example, inorganic salts, e.g., nitrates, sulfates, and hydrochlorides, and organic acid salts, e.g., acetates, can be used. The metal source may be either soluble or insoluble into a dispersion medium described later.

As for the catalyst according to the present invention, when the zeolite is allowed to carry a metal, the metal may be loaded on the zeolite, from which the templates have been removed, or the templates may be removed after the metal is loaded on the template-containing zeolite. However, it is preferable that the templates be removed after the metal is loaded on the template-containing zeolite because production steps are few in number and are simple.

In the case where the zeolite is allowed to carry the  metal by the ion exchange method, it is preferable that, in the common ion exchange method, the zeolite be used after the templates are removed by calcining or the like. This is because an ion-exchanged zeolite can be produced by ion exchange of the metal in pores from which the templates have been removed, but a template-containing zeolite cannot undergo ion exchange and, therefore, is unsuitable for loading a metal by the ion exchange method.

In the case where the metal is loaded after the template is removed, as described above, the templates contained in the zeolite can usually be removed by various methods, for example, a method in which calcining is performed at a temperature of usually 400°C or higher and 700°C or lower in air, an atmosphere of an inert gas containing oxygen or an inert gas and a method in which extracting is performed with an extraction agent, e.g., an ethanol aqueous solution or a HCl-containing ether.

In the case where the ion exchange method is not adopted for loading the metal, the catalyst can be produced by using the template-containing zeolite, and for example, removing a dispersion medium from a mixed dispersion of the zeolite and a metal source and, thereafter, performing a calcining step described below, so as to remove templates and carry the metal at the same time. The metal-loading methods excluding the ion exchange method are advantageous from the viewpoint of production because calcining for removing templates can be omitted.

In the case where the impregnation loading method is employed, calcining is performed after a dispersion medium is removed from a mixed dispersion containing the zeolite (which may be a template-containing zeolite or zeolite after removal of templates, and preferably a template-containing zeolite) and a metal source. In removal of this dispersion medium, in general, performing drying from a slurry state for a short time is preferable, and performing drying by using a spray-drying method is preferable.

The calcining temperature after drying is not specifically limited and is usually 400°C or higher, preferably 600°C or higher, further preferably 700°C or higher, and more preferably 800°C or higher, and the upper limit is usually 1,000°C or lower. If the calcining temperature is lower than the above-described lower limit value, the metal source may not be decomposed. In order to enhance the dispersibility of the metal on the zeolite and, in addition, enhance the interaction between the metal and the zeolite surface, a higher calcining temperature is preferable. However, if the above-described upper limit value is exceeded, the structure of the zeolite may be excessively destroyed.

As one of the methods for manufacturing the catalyst according to the present invention, a method can also be adopted, wherein in order to satisfy the amount of water adsorption, which is required of the catalyst according to the present invention and which is described later, the amount of water adsorption of the catalyst according to the present invention is adjusted by destroying part of the structure of the zeolite intentionally in the above-described step to allow the zeolite to carry the metal. In this case, a method in which the above-described calcining is performed at a higher temperature (850°C or higher, and preferably 900°C or higher) is effective. Also, for the same purpose, a method in which a large amount of passing gas is set in the calcining described below can be adopted. That is, the structure of the zeolite may be destroyed gradually by calcining at within the range of 850°C to 1,000°C, although depending on the type of the zeolite, the amount of metal loaded, and the degree of dispersion of the metal. In addition, the structure is further destroyed by performing a long term of calcining depending on the type of a calcining furnace and a calcining time. For example, in the case where the loaded metal is copper, the zeolite structure is destroyed by performing calcining for 2 hours at 850°C or higher when the amount of loaded copper is 4 percent by weight or more, at 900°C or higher when 3 percent by weight or more, and at 950°C or higher when 2.5 percent by weight or less.

Therefore, it is also possible to destroy the structure of the zeolite intentionally in the calcining step so as to produce the catalyst having an amount of water adsorption of 0.2 (kg-water/kg-catalyst) or less according to the present invention through the use of a zeolite having an amount of water adsorption of 0.25 to 0.35 (kg-water/kg-zeolite) at a relative vapor pressure of 0.5 with respect to a water vapor adsorption isotherm at 25°C, as described above.

However, if the calcining temperature is raised excessively or the calcining time is increased excessively, the zeolite structure is further destroyed, and the amount of $NH_3$ adsorption, described later, is decreased significantly, so that the catalyst performance is degraded.

The atmosphere of the above-described calcining is not specifically limited, and the calcining is performed in the air or in an inert atmosphere, e.g., in a nitrogen gas or in an argon gas. A water vapor may be included in the atmosphere.

The calcining method is not specifically limited, and a muffle furnace, a kiln, a fluidized bed calcining furnace, and the like can be used and a method in which calcining is performed under passing of the above-described atmosphere gas is desirable.

The passing rate of the gas is not specifically limited, although the passing rate of the gas per gram of powder to be calcined is usually 0.1 ml/min or more, preferably 5 ml/min or more, usually 100 ml/min or less, and preferably 20 ml/min or less.

If the passing rate of the gas per gram of powder to be calcined is less than the above-described lower limit value, an acid and the like which remain in a dry powder and which are derived from the metal source are not removed during heating, and the zeolite may be destroyed. If the above-described upper limit value is exceeded, the powder may be scattered.

The same conditions as those described in "Method for manufacturing catalyst for nitrogen oxide removal including metal oxide particles and/or inorganic binder, according to the present invention", as described later, can be applied to the details of the type of dispersion medium and the solid concentration of the mixed dispersion containing the above-described zeolite and metal source, drying and calcining conditions, and the like. That is, the catalyst containing the metal-loading zeolite, according to the present invention, can be produced in the same manner as "Method for manufacturing catalyst for nitrogen oxide removal including metal oxide particles and/or inorganic binder, according to the present invention", described later, except that metal oxide particles and/or inorganic binder is not blended into a mixed slurry.

{Amount of water adsorption}

The catalyst for nitrogen oxide removal, according to the present invention, is characterized by containing the above-described metal loading zeolite, wherein the amount of water adsorption at a relative vapor pressure of 0.5 with respect to a water vapor adsorption isotherm of the catalyst at 25°C (hereafter may be simply referred to as "amount of water adsorption") is 0.05 (kg-water/kg-catalyst) or more and 0.2 (kg-water/kg-catalyst) or less. The amount of water adsorption of the catalyst according to the present invention is preferably 0.18 (kg-water/kg-catalyst) or less, and further preferably 0.15 (kg-water/kg-catalyst) or less. If the amount of water adsorption is larger than the above-described upper limit, the purpose of the present invention is not achieved, and a degradation problem due to desorbing of adsorbed water along with a sharp increase in temperature is not solved. However, if the amount of water adsorption is decreased excessively, the nitrogen oxide removal performance tends to be degraded. Therefore, the lower limit of the amount of water adsorption of the catalyst according to the present invention is preferably 0.08 (kg-water/kg-catalyst) or more.

The amount of water adsorption of the catalyst according to the present invention can be determined from the amount of water adsorption at a relative vapor pressure of 0.5, where a water vapor adsorption amount measuring apparatus is used and a water vapor adsorption isotherm at 25°C is measured.

Alternatively, the following method can also be used as a simple method.

That is, a saturated magnesium nitrate aqueous solution is placed in a closed container, and an atmosphere of equilibrium relative humidity of 52.9% (relative vapor pressure 0.529) at 25°C is established by hermetical sealing. The catalyst having a thickness of 1 cm or less on a layer height basis is stood for 12 hours or more in that atmosphere, so as to adsorb water. The weight $W_1$ after water adsorption is measured and, subsequently, drying is performed at 150°C to 200°C for 10 minutes or more until a decrease in weight is stopped. The weight $W_2$ after drying is measured. The amount of water adsorption is determined on the basis of the following formula.

$$\text{amount of water adsorption} = [(\text{weight } W_1 \text{ after water adsorption}) - (\text{weight } W_2 \text{ after drying})]/(\text{weight } W_2 \text{ after drying})$$

As for the above-described drying and the weight measurement, after the sample may be dried in a dryer or the like and be taken out, cooling may be performed in a desiccator kept at a low humidity and, then, the weight may be measured. However, there is a high possibility that water is adsorbed in cooling and in the weight measurement. Therefore, it is preferable that a machine, e.g., an infrared moisture meter, be used, wherein drying can be performed by heating with infrared rays or the like while the weight is measured.

As described above, in general, the amount of water adsorption of the zeolite used in the present invention is usually 0.25 to 0.35 (kg-water/kg-zeolite) at a relative vapor pressure of 0.5 with respect to a water vapor adsorption isotherm at 25°C.

The present invention has been achieved by finding that the removal performance was excellent when a catalyst having an amount of water adsorption of 0.05 (kg-water/kg-catalyst) or more and 0.2 (kg-water/kg-catalyst) or less was used.

In order to specify the amount of water adsorption of the zeolite-containing catalyst according to the present invention to be 0.2 (kg-water/kg-catalyst) or less, it is necessary that water adsorption sites of the catalyst according to the present invention be decreased. Examples of methods for decreasing the water adsorption sites include a method in which part of the zeolite framework structure is destroyed by high-temperature calcining in the metal-loading step, as described above. Alternatively, a method is also mentioned, in which a catalyst contains metal oxide particles having an average particle diameter of 0.1 to 10 $\mu$m and/or an inorganic binder, preferably metal oxide particles and an inorganic binder besides the zeolite and, thereby, the amount of water adsorption is specified to be 0.2 (kg-water/kg-catalyst) or less.

The metal of the above-described metal oxide particles is not specifically limited, although aluminum, silicon, titanium, cerium, and niobium are preferable. In addition, elements, e.g., phosphorus, other than the metal may be contained, where aluminum phosphate is mentioned as an example. One or combinations of at least two of these metals may be employed.

The average particle diameter of the metal oxide particles is usually 0.1 to 10 $\mu$m, preferably 0.1 to 5 $\mu$m, and further preferably 0.1 to 3 $\mu$m. If the particle diameters of the metal oxide particles are too large and become larger than the particle diameter of the zeolite, the metal-loading zeolite does not function effectively, and the removal performance is degraded. In this regard, the particle diameter of the metal oxide particle here refers to an average value of primary particles of metal oxide particles at randomly selected 10 to 30 points, where metal oxide particles are observed with an electron microscope. The same goes for the average particle diameter of the inorganic binder described below.

As for the inorganic binder, silica sol, alumina sol, titania sol, ceria sol, and the like are used. One of them may be used alone, or at least two of them may be used in combination. Among them, silica sol is preferable because of the ability to adhere the zeolite and low price.

The inorganic binder has an average particle diameter of 5 to 100 nm, preferably 4 to 60 nm, and more preferably 10 to 40 nm and is a sol of inorganic oxide. If this average particle diameter is more than the above-described upper limit, an interaction with the zeolite surface is not sufficient, contribution of an acid site of the inorganic binder to a catalytic action and the like becomes insufficient, and the catalyst performance is degraded. In this regard, there is no specific lower limit of the average particle diameter. However, an inorganic binder having an excessively small particle diameters is not available. In an actual catalyst, inorganic oxide sols are observed as aggregates because of reaction with a zeolite surface or reaction of inorganic oxide sols with each other due to calcining.

It is preferable that the content of alkali metal, e.g., sodium, of the inorganic binder be 0.2 percent by weight or less, especially 0.1 percent by weight or less, and most notably 0.05 percent by weight or less. If the alkali metal content of the inorganic binder is large, ion exchange proceeds in pores of the zeolite, dispersion of loaded metal, e.g., copper, on the zeolite is hindered, and the catalyst performance may be degraded. In this regard, it is preferable that the alkali metal content of the inorganic binder be minimized, and the lower limit is 0 percent by weight.

The compounds of the metal oxide of the above-described metal oxide particles and the above-described inorganic binder overlap with each other. In the present invention those having an average particle diameter of 0.1 to 10 $\mu$m and, therefore, large particle diameters are specified to be metal oxide particles, and those in the shape of fine particles having particle diameters smaller than the particle diameters of such metal oxide particles are specified to be the inorganic binder.

The above-described catalyst according to the present invention having the amount of water adsorption adjusted by containing the metal oxide particles and/or inorganic binder can be produced following the method for manufacturing a catalyst for nitrogen oxide removal, according to the present invention, described later.

The catalyst according to the present invention preferably contains both the metal oxide particles and the inorganic binder for the reason described below.

That is, the amount of water adsorption of the whole catalyst can be decreased by adding the metal oxide particles. But, if the metal oxide particles are added, the removal performance of the whole catalyst is degraded correspondingly. However, on the basis of studies by the present inventors, it was found that the removal performance was improved by adding an appropriate amount of inorganic binder. It is believed that this is because the inorganic binder covers the zeolite surface so as to improve dispersion of loaded metal, e.g., copper or iron, and in addition, acid sites are given so as to exert an effect of facilitating the catalytic reaction. Consequently, it is preferable that the metal oxide particles be added so as to decrease the amount of water adsorption of the whole catalyst and, in addition, the inorganic binder be added so as to make up the removal performance degraded because of addition of the metal oxide particles.

In the case where the catalyst according to the present invention contains both the metal oxide particles and the inorganic binder, it is preferable that the weight ratio of the metal oxide particles to the inorganic binder in the catalyst is specified to be metal oxide particles:inorganic binder = 1:100 to 100:1, and especially 1:10 to 10:1 in order to effectively obtain the above-described effect due to use of them in combination.

It has been known that, in production of the catalyst, when a mixed slurry is prepared, preferably 10 percent by weight or less, which is in consideration of avoidance of degradation in catalyst performance, of inorganic sol corresponding to the above-described inorganic binder, clay based additives, e.g., sepiolite, montmorillonite, and kaolin, and the like serving as additives are used relative to the zeolite for the purpose of adjustment of viscosity or control of particle shape and particle diameter after removal of the dispersion medium. However, the use is not for the purpose of canceling the amount of water adsorption of the zeolite and specifying the amount of water adsorption of the resulting catalyst to be 0.2 (kg-water/kg-catalyst) or less. Therefore, in contrast to the catalyst according to the present invention, it is not possible to specify the amount of water adsorption of the zeolite-containing catalyst to be 0.2 (kg-water/kg-catalyst) or less by the amount of about 10 percent by weight or less, which is employed previously.

{Zeolite content}

In the case where other components, e.g., the above-described metal oxide particles and/or inorganic binder, are not contained, the zeolite content of the catalyst according to the present invention is a value satisfying the above-described favorable amount of loaded metal. In particular, in the case where the above-described metal oxide particles and/or inorganic binder is contained, the zeolite content (content of zeolite containing loaded metal) is preferably 30 to 99 percent by weight, more preferably 40 to 95 percent by weight, and notably preferably 50 to 90 percent by weight. In the case where the zeolite content in the catalyst according to the present invention is more than or equal to the above-described lower limit value, high nitrogen oxide removal performance can be obtained, and in the case of less than or equal to the above-described upper limit value, the amount of water adsorption can be adjusted easily by blending the metal oxide particles and/or inorganic binder.

The catalyst according to the present invention may contain various additives, e.g., the above-described clay based additives, silicones which are oligomers or polymers including a polysiloxane bond in a main chain (including those having OH groups produced by hydrolysis of part of substituents of a main chain of a polysiloxane bond), and components derived from silicic acid solution, besides the above-described metal oxide particles and/or inorganic binder.

{Particle diameter}

The particle diameter of the catalyst for nitrogen oxide removal, according to the present invention, is usually 15 $\mu$m or less, and preferably 10 $\mu$m or less in terms of average primary particle diameter, and the lower limit is usually 0.1 $\mu$m. If the particle diameter of the catalyst is too large, the specific surface area per unit weight decreases, so that the efficiency of contact with the gas to be treated is low. Therefore, the efficiency of removal of nitrogen oxide is low. If the particle diameter of the catalyst is too small, the handleability is degraded. Therefore, the catalyst, after calcining, obtained by allowing the zeolite to carry a metal by the above-described method or the catalyst, after calcining, obtained by the method for manufacturing a catalyst for nitrogen oxide removal according to the present invention described later, may be subjected to dry pulverization, e.g., jet mill, or wet pulverization, e.g., ball mill, as necessary. In this regard, the method for measuring the average primary particle diameter of the catalyst is the same as the above-described method for measuring the average primary particle diameter of the zeolite.

{BET specific surface area}

The specific surface area (BET method) of the catalyst for nitrogen oxide removal, according to the present invention, is usually within the range of about 150 to 400 $m^2$/g, and preferably within the range of 200 to 350 $m^2$/g and

is smaller than the specific surface area of SAPO serving as the SCR catalyst which is believed to be preferable in general.

{Amount of $NH_3$ adsorption}

It is preferable that the catalyst for nitrogen oxide removal, according to the present invention, have the amount of $NH_3$ adsorption measured by the following method for measuring an amount of $NH_3$ adsorption (hereafter may be simply referred to as "amount of $NH_3$ adsorption" of 0.28 mmol/g-catalyst or more, and especially 0.38 mmol/g-catalyst or more in addition to the specification of the above-described amount of water adsorption.

<Method for measuring amount of $NH_3$ adsorption>

The catalyst is allowed to adsorb ammonia at 200°C until saturation is reached and, thereafter, Gas 1 shown in Table 2 is passed to bring about an equilibrium state of a reduction reaction of NO by ammonia. Subsequently, the amount of $NH_3$ adsorption (mmol/g-catalyst) is determined from a total amount of NO reduced when Gas 2 is passed on the basis of the following formula.

$$\text{amount of } NH_3 \text{ adsorption} = \text{total amount of NO/catalyst weight (g)}$$

[Table 2]

|  | Gas 1 | Gas 2 |
|---|---|---|
| NO | 350ppm | 350ppm |
| $NH_3$ | 385ppm | 0 |
| $O_2$ | 15 percent by volume | 15 percent by volume |
| $H_2O$ | 5 percent by volume | 5 percent by volume |
| $N_2$ | part other than the above-described components | part other than the above-described components |

In the present invention, it is considered that the amount of $NH_3$ adsorption of the catalyst indicates the amount of active sites of the SCR catalyst within the bounds of satisfying the above-described specification of the amount of water adsorption of the catalyst according to the present invention. That is, if the amount of water adsorption is more than the range of the present invention, even when the amount of $NH_3$ adsorption is large, the amount of water adsorption is large and, therefore, degradation occurs under the condition in which adsorption and desorption of water are repeated, so that sufficient SCR catalyst activity is not achieved. In general, if the amount of $NH_3$ adsorption is large, it seems that the amount of water adsorption tends to become large. However, the catalyst according to the present invention has characteristics that the amount of water adsorption is small, but the amount of $NH_3$ adsorption is relatively large, and the SCR catalyst activity is excellent.
In this regard, the upper limit of the amount of $NH_3$ adsorption of the catalyst according to the present invention is not particularly specified, but is usually about 2 mmol/g-catalyst on the basis of the upper limit of ammonia adsorption sites of the catalyst.
Meanwhile, in the above-described method for measuring amount of $NH_3$ adsorption, initially, the catalyst is allowed to adsorb ammonia by passing a mixed gas of ammonia gas and air, where the ammonia concentration is 1,000 ppm, for 30 minutes and, subsequently, Gas 1 having a composition shown in table 2 described above is passed for 20 minutes, so that excess ammonia on the catalyst is desorbed and removed. Thereafter, Gas 2 having a composition shown in Table 2 described above is passed so as to induce NO reduction reaction by using only ammonia on the catalyst. Gas 2 is passed so as to induce the NO reduction reaction until the NO concentration in a gas flowing out of a reaction tube becomes equal to the NO concentration of Gas 2 introduced into the reaction tube. The amount of $NH_3$ adsorption (mmol/g-catalyst), which is adsorbed on the catalyst after excess ammonia has been desorbed, can be calculated from a total amount (mmol) of nitrogen monoxide (NO) (total amount of NO) reduction-treated in the NO reduction reaction ($4NO + 4NH_3 + O_2 \rightarrow 4N_2 + 6H_2O$) on the basis of the above-described formula.
All the above-described adsorption of ammonia, desorption of excess ammonia, and NO reduction reaction are performed under the temperature condition of 200°C while the gas is passed at SV = 100,000/h.

{X-ray diffraction peak intensity ratio}

The catalyst for nitrogen oxide removal, according to the present invention, is characterized in that when an X-ray diffraction measurement by using Cu-K$\alpha$, rays as an X-ray source is performed by the following method, the ratio of a diffraction peak intensity observed in the range of diffraction angle ($2\theta$) of 21.0 degrees or more and 21.4 degrees or less to a diffraction peak intensity observed in the range of 20.4 degrees or more and 20.8 degrees or less (hereafter may be referred to as "diffraction peak intensity ratio") is 0.2 or more and 1.2 or less.

<Method for measuring X-ray diffraction>

X-ray source: Cu-K$\alpha$, rays
Output setting: 40 kV·30 mA
Optical condition in measurement:
Divergence slit = 1°
Scattering slit = 1°
Light receiving slit = 0.2 mm
Position of diffraction peak: $2\theta$ (diffraction angle)
Measurement range: $2\theta$ = 3 to 50 degrees
Scan rate: 3.0° ($2\theta$/sec), continuous scan Preparation of sample: A sample is pulverized with an agate mortar by man power, and the amounts of samples are specified to be constant at about 700 mg by using sample holders having the same shape.
Calculation of intensity ratio: A diffraction peak intensity is defined as a peak height from a base line where no diffraction peak is present, and a ratio of the height of a diffraction peak observed in the range of diffraction angle ($2\theta$) of 21.0 degrees or more and 21.4 degrees or less to the height of a diffraction peak observed in the range of 20.4 degrees or more and 20.8 degrees or less is determined.

When an X-ray diffraction measurement by using Cu-K$\alpha$ rays as an X-ray source is performed, a diffraction peak observed in the range of diffraction angle ($2\theta$) of 20.4 degrees or more and 20.8 degrees or less is a "diffraction peak derived from CHA zeolite". Furthermore, a diffraction peak observed in the range of 21.0 degrees or more and 21.4  degrees or less is a "diffraction peak generated by subjecting a metal-loading zeolite to a heat treatment, e.g., calcining".
As for the catalyst according to the present invention, this ratio of a diffraction peak intensity observed in the range of diffraction angle ($2\theta$) of 21.0 degrees or more and 21.4 degrees or less to a diffraction peak intensity observed in the range of 20.4 degrees or more and 20.8 degrees or less is usually 0.2 or more and 1.2 or less, and preferably 0.4 or more and 1.0 or less. If this diffraction peak intensity ratio is less than the above-described lower limit, the amount of water adsorption of the catalyst increases, and the catalyst performance is degraded. Meanwhile, if this diffraction peak intensity ratio is more than the above-described upper limit, the amount of $NH_3$ adsorption of the catalyst decreases, and the catalyst performance is degraded.

[Method for manufacturing metal oxide particles and/or inorganic binder-containing catalyst for nitrogen oxide removal]

The catalyst for nitrogen oxide removal, according to the present invention, can also be produced by containing a metal-loading zeolite and the above-described metal oxide particles and/or inorganic binder.
The catalyst according to the present invention can be produced by the method for manufacturing a catalyst for nitrogen oxide removal, according to the present invention, in which a metal source of the above-described loaded metal, a zeolite, and the metal oxide particles having an average particle diameter of 0.1 to 10 $\mu$m and/or an inorganic binder are mixed with a dispersion medium so as to prepare a mixed slurry, the resulting mixed slurry is dried so as to remove the dispersion medium, and the resulting dry powder is calcined.
The dispersion medium refers to a liquid to disperse the zeolite. The type of dispersion medium is not specifically limited, and usually, at least one of water, alcohol, ketone, and the like is used. It is desirable that water is used as the dispersion medium from the viewpoint of the safety in heating.
The order of mixing in preparation of the mixed slurry is not specifically limited. Usually, it is preferable that initially, the metal source be dissolved or dispersed into the dispersion medium containing the metal oxide particles and/or inorganic binder, and the zeolite be mixed to this.

The proportion of solid in the slurry prepared by mixing the above-described components is preferably 5 to 60 percent by weight, and more preferably 10 to 50 percent by weight. If the proportion of solid in the slurry is less than the above-described lower limit value, the amount of dispersion medium to be removed is large and, thereby, a dispersion medium removal step may be hindered. On the other hand, if the proportion of solid in the slurry is more than the above-described upper limit value, uniform dispersion of the metal and components other than the zeolite on the zeolite tends to become difficult.

In this regard, as described above, the zeolite used for preparation of the mixed slurry may be the zeolite containing the templates, or be the zeolite from which templates have been removed.

The blending temperature of the mixed slurry is usually 0°C or higher, preferably 10°C or higher, usually 80°C or lower, and preferably 60°C or lower.

The zeolite may generate heat by being mixed with a dispersion medium, and if the blending temperature is more than the above-described upper limit value, the zeolite may be decomposed by an acid or an alkali. The lower limit of the blending temperature is a melting point of the dispersion medium.

The pH in blending of the mixed slurry is not specifically limited, and is usually 3 or more, preferably 4 or more, and further preferably 5 or more, and usually 10 or less, preferably 9 or less, and further preferably 8 or less. If blending is performed while the pH is specified to be lower than the above-described lower limit value or more than the above-described upper limit value, the zeolite may be decomposed.

This mixed slurry may contain the above-described various additives, e.g., clay based additives, silicones which are oligomers or polymers including a polysiloxane bond in a main chain (including those having OH groups produced by hydrolysis of part of substituents of a main chain of a polysiloxane bond), and silicic acid solution, where these additives may be contained in the catalyst according to the present invention.

The mixing method in blending of the mixed slurry may be a method in which the zeolite, the metal source, and other components are mixed or dispersed sufficiently, and various known methods are employed. Specifically, agitation, ultrasonic waves, homogenizers, and the like are employed.

<Drying of mixed slurry>

The method for drying the above-described mixed slurry is not specifically limited insofar as the method can remove the dispersion medium in the mixed slurry in a short time. Preferably, it is favorable to adopt a spray drying method which is a method capable of removing the dispersion medium in a short time through a uniformly sprayed state of the mixed slurry. It is favorable to adopt more preferably a method in which the dispersion medium is removed by being brought into contact with a high-temperature heat transfer medium through a uniformly sprayed state of the mixed slurry, and further preferably a method in which the dispersion medium is removed by being brought into contact with hot air serving as a high-temperature heat transfer medium so as to be dried and, thereby, a uniform powder can be obtained.

In the present invention, in the case where spray drying is applied to drying of the mixed slurry, as for a spraying method, for example, centrifugal spraying by a rotating disc, pressure spraying by a pressure nozzle, and spraying by a two-fluid nozzle, a four-fluid nozzle, and the like can be used.

The sprayed slurry is allowed to come into contact with a heat transfer medium, e.g., a heated metal plate or a high-temperature gas, so that the dispersion medium is removed. In each case, the temperature of the heat transfer medium is not specifically limited and is usually 80°C or more and 350°C or less. If the temperature of the heat transfer medium is lower than the above-described lower limit value, the dispersion medium may not be removed from the mixed slurry sufficiently, and if higher than the above-described upper limit value, the metal source may be decomposed and metal oxides may aggregate.

The drying condition in the case where a spray dryer is used is not specifically limited. The drying is usually performed while the inlet temperature of a gas serving as a heat transfer medium is specified to be about 200°C to 300°C, and the outlet temperature of the gas is specified to be about 60°C to 200°C.

The drying time required for drying the mixed slurry to remove the dispersion medium is preferably 60 minutes or less, more preferably 10 minutes or less, further preferably 1 minute or less, and especially preferably 10 seconds or less, and it is desirable that drying is performed in a shorter time. The lower limit of this drying time is not specifically limited and is usually 0.1 seconds or more.

If the drying is performed taking a time more than the above-described upper limit value, the metal source aggregates on the zeolite surface to load the metal, and loading becomes nonuniform, so as to cause degradation in catalyst activity. Meanwhile, in general, the metal source exhibits acidity or alkalinity. Therefore, it is considered that exposure of the state containing these metals to a high temperature condition in the presence of the dispersion medium for a long time facilitates decomposition of the structure of the metal-loading zeolite. Consequently, it is considered that as the drying time increases, the catalyst activity is degraded.

The drying time to remove the dispersion medium from the mixed slurry here refers to the duration required for decreasing the amount of the dispersion medium in the material to be dried to 1 percent by weight or less. The drying time in the case where water is the dispersion medium refers to the duration from the point in time when the temperature of the mixed slurry becomes 80°C or higher until the water content in the material to be dried becomes 1 percent by weight or less. The drying time in the case where the dispersion medium is other than water refers to the duration from the point in time when a temperature 20°C lower than the boiling point of the dispersion medium at normal pressure is reached until the dispersion medium content in the material to be dried becomes 1 percent by weight or less.

The particle diameter of the dry powder obtained by removing the dispersion medium from the above-described mixed slurry through drying is not specifically limited. However, it is preferable that the mixed slurry is dried in such a way that the particle diameter becomes usually 1 mm or less, preferably 200 μm or less, and usually 2 μm or more in order to finish drying in a short time.

<Calcining of dry powder>

The dry powder obtained by the above-described drying is then calcined, so that the catalyst according to the present invention is obtained.

The method for calcining the dry powder is not specifically limited. A muffle furnace, a kiln, a fluidized bed calcining furnace, and the like can be used, and a method in which calcining is performed under passing of a gas is desirable.

The gas passed during calcining is not specifically limited. Air, nitrogen, oxygen, helium, argon, mixed gases thereof, and the like can be used and, preferably, the air is used. In this regard, the passing gas may include a water vapor. Calcining can also be performed in a reducing atmosphere. In that case, calcining can be performed while hydrogen is mixed into the passing gas or an organic material, e.g., oxalic acid, is mixed into the dry powder.

The passing rate of the gas is not specifically limited. The amount of passing gas per gram of powder to be calcined is usually 0.1 ml/min or more, preferably 5 ml/min or more, usually 100 ml/min or less, and preferably 20 ml/min or less. If the amount of passing gas per gram of powder is less than the above-described lower limit value, an acid remaining in the dry powder is not removed during heating, and the zeolite may be destroyed. If the amount of passing is more than the above-described upper limit value, the powder may be scattered.

The calcining temperature is not specifically limited and is usually 400°C or higher, preferably 500°C or higher, more preferably 600°C or higher, further preferably 700°C or higher, and more preferably 800°C or higher, usually 1,100°C or lower, and preferably 1,000°C or lower. In the case of the above-described method in which the amount of water adsorption of the catalyst is specified to be 0.2 (kg-water/kg-catalyst) or less by destroying part of the zeolite structure through high-temperature calcining, the calcining is performed at a calcining temperature of usually 850°C or higher, preferably 900°C or higher, and preferably 1,000°C or lower.

The calcining time is usually 1 minute to 3 days, preferably 0.5 to 24 hours, and more preferably 1 to 10 hours, although being changed depending on the calcining temperature. If the calcining time is too small, the metal source may not be decomposed. On the other hand, even when the calcining time is increased in vain, an effect of calcining is not obtained, and the production efficiency decreases.

After the calcining, in order to obtain a predetermined particle diameter, the resulting catalyst may be subjected to dry pulverization, e.g., jet mill, or wet pulverization, e.g., ball mill, as described above.

In the present invention, in the case where the amount of water adsorption of the metal-loading zeolite is specified to be within the predetermined range by the high-temperature calcining in the above-described metal-loading step, there is no need for adjusting the amount of water adsorption of the catalyst by blending the above-described metal oxide particles and/or inorganic binder. However, it is also possible to blend small amounts of metal oxide particles and/or inorganic binder to the extent required for using the catalyst.

In the present invention, it is also possible that the catalyst having a decreased amount of water adsorption because of calcining is blended with metal oxide particles and/or an inorganic binder and, thereby the amount of water adsorption is further decreased to a predetermined range, as a matter of course. In this regard, in the case where a metal-loading zeolite is blended with the metal oxide particles and/or inorganic binder, calcining may be performed after loading of the metal and calcining may be performed again after the metal oxide particles and/or inorganic binder is blended. Alternatively, calcining is not performed in the metal-loading step, and calcining may be performed after the metal oxide particles and/or inorganic binder is blended, or a method in which calcining is performed after the metal-loading step and calcining is not performed after the metal oxide particles and/or inorganic binder is blended can also be adopted.

[Device for nitrogen oxide removal]

The catalyst according to the present invention or a catalyst mixture containing this catalyst can be used as an device for nitrogen oxide removal in various fields by being made into a predetermined shape through granulation, forming (including film formation), or the like. In particular, the device for nitrogen oxide removal according to the present invention by using the catalyst according to the present invention (hereafter may be referred to as "device for removal according to the present invention") is useful as an automobile exhaust gas catalyst (SCR catalyst), although the use thereof is not limited to the automobile use.

The methods of granulation and forming of the catalyst according to the present invention are not specifically limited, and various known methods can be employed. Usually, a catalyst mixture containing the catalyst according to the present invention is subjected to forming and is used as a processed product. As for the shape of the processed product, a honeycomb shape is preferably employed.

In the case of use for cleaning of an exhaust gas of an automobile or the like, the device for removal according to the present invention is produced by, for example, mixing the catalyst for nitrogen oxide removal, according to the present invention with an inorganic binder, e.g., silica or alumina, so as to prepare a slurry., applying this to the surface of a honeycomb processed product produced from an inorganic material, e.g., cordierite, and performing calcining. The catalyst for nitrogen oxide removal according to the present invention is kneaded with an inorganic binder, e.g., silica or alumina, and an inorganic fiber, e.g., an alumina fiber or a glass fiber, forming is performed by an extrusion method, a compression method, or the like, and subsequently, calcining is performed, so that preferably, a honeycomb device for removal can be produced.

[Method for using catalyst]

The catalyst for nitrogen oxide removal or device for nitrogen oxide removal according to the present invention can be used for removing nitrogen oxides in exhaust gases by being brought into contact with exhaust gases containing nitrogen oxides.

Components other than nitrogen oxides may be contained in the exhaust gas. For example, hydrocarbons, carbon monoxide, carbon dioxide, hydrogen, nitrogen, oxygen, sulfur oxides, and water may be contained. Examples of exhaust gases containing nitrogen oxides include various types of exhaust gases containing nitrogen oxides discharged from diesel powered automobiles, gasoline powered automobiles, various diesel engines for stationary power generation, ship, agricultural implement and machinery, construction machinery, two-wheeled vehicle, aircraft, boilers, gas turbines, and the like.

In treatment of the exhaust gas containing nitrogen oxides by using the catalyst for nitrogen oxide removal or device for nitrogen oxide removal according to the present invention, the contact condition between the catalyst or device for removal according to the present invention and the exhaust gas is not specifically limited. The space velocity of the exhaust gas to be treated is usually 100/h or more, preferably 1, 000/h or more, usually 500,000/h or less, and preferably 100,000/h or less. Also, the exhaust gas temperature in contact is usually 100°C or higher, preferably 150°C or higher, usually 700°C or lower, and preferably 500°C or lower.

In such an exhaust gas treatment, the catalyst or device for removal can be used while a reducing agent is allowed to be present together therewith, and the removal can proceed efficiently because of the reducing agent being present together. As for the reducing agent, at least one of ammonia, urea, organic amines, carbon monoxide, hydrocarbons, hydrogen, and the like is used, and preferably, ammonia and urea are used.

It is possible that a step to decompose a reducing agent by a catalyst to oxidize an excess reducing agent not consumed in removal of nitrogen oxides is provided as a latter step of the removal step in which nitrogen oxides in the exhaust gas are removed by using the catalyst or device for removal according to the present invention and, thereby, the amount of the reducing agent in the treated gas is decreased. In that case, a catalyst in which a metal, e.g., a platinum group, is loaded on a carrier, e.g., zeolite, to adsorb the reducing agent can be used as an oxidation catalyst. The above-described zeolite used in the present invention and the catalyst according to the present invention can also be used as the zeolite and the oxidation catalyst concerned.

EXAMPLES

The present invention will be specifically described below with reference to examples. However, the present invention is not limited to the examples described below within the bounds of the gist thereof.

In the following examples and comparative examples, the property measurements and the treatments described below are performed under the conditions described below.

[Composition analysis]

The sample was subjected to alkali fusion and, thereafter, was dissolved into an acid. The resulting solution was analyzed by inductively coupled plasma-atomic emission spectrometry (ICP-AES method).

[Evaluation of catalyst activity]

A prepared catalyst was subjected to press forming and, thereafter, pulverization was performed so as to adjust the size in such a way that the particle diameter became 600 to 1,000 $\mu$m. A normal pressure fixed bed flow type reaction tube was charged with 1 ml of each catalyst subjected to size adjustment. A nitrogen gas containing NO: 350 ppm, $NH_3$: 385 ppm, $O_2$: 15 percent by volume, and $H_2O$: 5 percent by volume and serving as a nitrogen oxide-containing gas was passed through this reaction tube charged with the catalyst at a temperature of 200°C and a space velocity SV = 100,000/h, so as to heat a catalyst layer. When the NO concentration in the reaction tube outlet gas (outlet NO concentration) became constant, the NO removal factor was calculated on the basis of the following formula and was taken as the nitrogen oxide removal activity of the catalyst.

$$NO\ removal\ factor = \{(inlet\ NO\ concentration) - (outlet\ NO\ concentration)\}/(inlet\ NO\ concentration) \times 100$$

[Water vapor adsorption isotherm]

The sample was evacuated at 120°C for 5 hours and, thereafter, the water vapor adsorption isotherm at 25°C was measured with a water vapor adsorption instrument (BELSORP 18: produced by BEL Japan, Inc.) under the following condition.

Air thermostatic bath temperature: 50°C
Adsorption temperature: 25°C
Initial introduction pressure: 3.0 torr
The number of set points of introduction pressure: 0
Saturated vapor pressure: 23.755 torr
Equilibrium time: 500 seconds

[Simple method for measuring amount of water adsorption]

A saturated magnesium nitrate aqueous solution was placed in a closed container, and an atmosphere of equilibrium relative humidity of 52.9% (relative vapor pressure 0.529) at 25°C was established. The catalyst having a thickness of 0.5 cm on a layer height basis was stood for 12 hours in that atmosphere, so as to adsorb water. The weight $W_1$ after water adsorption was measured and, subsequently, drying was performed at 200°C for 90 minutes by using an infrared moisture meter. The weight $W_2$ after drying was measured, and the amount of water adsorption was determined on the basis of the following formula.

$$amount\ of\ water\ adsorption = [(weight\ W_1\ after\ water\ adsorption) - (weight\ W_2\ after\ drying)]/(weight\ W_2\ after\ drying)$$

[Method for measuring amount of $NH_3$ adsorption]

A prepared catalyst was subjected to press forming and, thereafter, pulverization was performed so as to adjust the size in such a way that the particle diameter became 600 to 1,000 $\mu$m. A normal pressure fixed bed flow type reaction tube was charged with 1 ml of each catalyst subjected to size adjustment. A catalyst layer was brought into a constant temperature condition of a temperature of 200°C, and a mixed gas of an ammonia gas and air having an ammonia concentration of 1,000 ppm was passed through this reaction tube at a space velocity SV = 100,000/h for 30 minutes, so that ammonia was adsorbed to the catalyst. Subsequently, Gas 1 having a composition shown in Table 3 described below was passed for 20 minutes to desorb excess ammonia on the catalyst. Thereafter, Gas 2 having a composition shown in Table 3 described below was passed by stopping supply of an ammonia gas of Gas 1, so as to induce NO reduction reaction by using only ammonia adsorbed on the catalyst.
The NO reduction reaction was induced by passing a measurement gas until the NO concentration in a gas flowing out of the reaction tube became equal to the NO concentration of Gas 2 introduced into the reaction tube. The amount of

NH$_3$ adsorption (mmol/g-catalyst) was calculated from a total amount (mmol) of nitrogen monoxide (NO) (total amount of NO) reduction-treated in this NO reduction reaction on the basis of the following formula.

```
amount of NH3 adsorption = total amount of NO/catalyst

weight (g) charged into reaction tube
```

[Table 3]

|  | Gas 1 | Gas 2 |
| --- | --- | --- |
| NO | 350ppm | 350ppm |
| NH$_3$ | 385ppm | 0 |
| O$_2$ | 15 percent by volume | 15 percent by volume |
| H$_2$O | 5 percent by volume | 5 percent by volume |
| N$_2$ | part other than the above-described components | part other than the above-described components |

<Method for measuring X-ray diffraction>

X-ray source: Cu-K$\alpha$ rays
Output setting: 40 kV·30 mA
Optical condition in measurement:

   Divergence slit = 1°
   Scattering slit = 1°

Light receiving slit = 0.2 mm
Position of diffraction peak: 2$\theta$ (diffraction angle)
Measurement rage: 2$\theta$ = 3 to 50 degrees
Scan rate: 3.0° (2$\theta$/sec), continuous scan

Preparation of sample: A sample was pulverized with an agate mortar by man power, and the amounts of samples were specifies to be constant at about 700 mg by using sample holders having the same shape.

Calculation of intensity ratio: A diffraction peak intensity was defined as a peak height from a base line where no diffraction peak was present, and a ratio of the height of a diffraction peak observed in the range of diffraction angle (2$\theta$) of 21.0 degrees or more and 21.4 degrees or less to the height of a diffraction peak observed in the range of 20.4 degrees or more and 20.8 degrees or less was determined.

[EXAMPLE 1]

After 80.8 g of 85% phosphoric acid and 68 g of pseudo-boehmite (containing 25% of water, produced by Sasol) are added to 253 g of water gradually, agitation was performed. This was specified to be Liquid A. Separately from preparation of Liquid A, a mixed liquid of 18 g of fumed silica (AEROSIL 200, produced by NIPPON AEROSIL CO., LTD.), 43.5 g of morpholine, 55.7 g of triethylamine, and 253 g of water was prepared. This was added to Liquid A gradually, and agitation was performed for 3 hours, so as to obtain an aqueous gel. The aqueous gel was charged into a 1-L stainless steel autoclave including a fluororesin internal cylinder, the temperature was raised from 30°C to 190°C linearly at a temperature raising rate of 16°C/hour while agitation was performed, and a reaction was induced at a maximum ultimate temperature of 190°C for 50 hours. In the process of raising temperature to the maximum ultimate temperature, the residence time in the range of 80°C to 120°C was 2.5 hours. After the reaction, cooling was performed, and the precipitate was recovered by removing the supernatant through decantation. The precipitate was washed 3 times with water, filtration was performed, drying was performed at 120°C and, thereafter, dry-pulverization was performed. Subsequently, calcining was performed at 560°C in an air stream, so as to remove templates.

The XRD of the thus obtained zeolite was measured. As a result, a CHA structure (framework density = 14.6 T/nm$^3$) was identified.

In this regard, the average primary particle diameter of the zeolite was 4 $\mu$m, and the abundances of Al, Si, and P atoms in the zeolite, which were expressed in the values of x1, y1, and z1 in Formulae (I) to (III) described above, were x1 = 0.15, y1 = 0.52, and z1 = 0.33.

Meanwhile, the amount of water adsorption of this zeolite was 0.286 (kg-water/kg-zeolite), and the amount of water adsorption when the relative vapor pressure was changed by 0.05 in the range of the relative vapor pressure of 0.04 or more and 0.09 or less was 0.07 (kg-water/kg-zeolite).

A water slurry (solid concentration 36 percent by weight) was prepared by adding 1.8 g of copper (II) acetate-hydrate (produced by KISHIDA CHEMICAL Co., Ltd.) to 50 g of silica sol (SNOWTEX AK-L, produced by NISSAN CHEMICAL INDUSTRIES, LTD., aggregate sol having a particle diameter of 40-50 nm) so as to dissolve, adding 10 g of the above-described zeolite, and further performing agitation. The resulting water slurry was sprayed on a metal plate at 170°C so as to be dried and, thereby, a catalyst precursor was produced. The duration required for drying was 10 seconds or less. The resulting catalyst precursor was calcined at 800°C for 2 hours, while air was passed at 12 ml per gram of catalyst precursor/min, so as to obtain Catalyst 1.

The NO removal factor, the amount of water adsorption, and the amount of NH$_3$ adsorption of Catalyst 1 were examined on the basis of the above-described condition, and the results are shown in Table 4.

[EXAMPLE 2]

After 10 g of silica sol (SNOWTEX O, produced by NISSAN CHEMICAL INDUSTRIES, LTD., aggregate sol having a particle diameter of 10-20 nm) was diluted with 20 g of water, 1.8 g of copper (II) acetate-hydrate (produced by KISHIDA CHEMICAL Co., Ltd.) was added so as to dissolve. Subsequently, a water slurry (solid concentration 43 percent by weight) was prepared by adding 8 g of titanium oxide powder (AW-200 produced by Teikoku Kagaku Sangyo K.K.) and 10 g of zeolite described in Example 1, and further performing agitation. The resulting water slurry was sprayed on a metal plate at 170°C so as to be dried and, thereby, a catalyst precursor was produced as with Example 1. The duration required for drying was 10 seconds or less. The resulting catalyst precursor was calcined at 800°C for 2 hours, while air was passed at 12 ml per gram of catalyst precursor/min, so as to obtain Catalyst 2.

The NO removal factor, the amount of water adsorption, and the amount of NH$_3$ adsorption of Catalyst 2 were examined on the basis of the above-described condition, and the results are shown in Table 4.

[EXAMPLE 3]

After 27.8 g of silica sol (SNOWTEX O, produced by NISSAN CHEMICAL INDUSTRIES, LTD., aggregate sol having a particle diameter of 10-20 nm) was diluted with 15 g of water, 1.8 g of copper (II) acetate-hydrate (produced by KISHIDA CHEMICAL Co., Ltd.) was added so as to dissolve. Subsequently, a water slurry (solid concentration 38 percent by weight) was prepared by adding 8 g of boehmite powder (produced by Condea, average particle diameter 20 $\mu$m) and 10 g of zeolite described in Example 1, and further performing agitation. The resulting water slurry was sprayed on a metal plate at 170°C so as to be dried and, thereby, a catalyst precursor was produced as with Example 1. The duration required for drying was 10 seconds or less. The resulting catalyst precursor was calcined at 800°C for 2 hours, while air was passed at 12 ml per gram of catalyst precursor/min, so as to obtain Catalyst 3.

The NO removal factor, the amount of water adsorption, and the amount of NH$_3$ adsorption of Catalyst 3 were examined on the basis of the above-described condition, and the results are shown in Table 4.

[EXAMPLE 4]

A copper-loading SAPO catalyst (average particle diameter 3 $\mu$m) was prepared by a method disclosed in Example 1A of International Publication No. WO 2010/084930. Thereafter, 5g of copper-loading SAPO catalyst and 5 g of quartz powder were mixed in a mortar, so as to obtain Catalyst 4.

The NO removal factor, the amount of water adsorption, and the amount of NH$_3$ adsorption of Catalyst 4 were examined on the basis of the above-described condition, and the results are shown in Table 4.

[EXAMPLE 5]

After 192.6 g of water, 76.8 g of 75% phosphoric acid, and 57.1 g of pseudo-boehmite (containing 25% of water, produced by Sasol) are mixed, agitation was performed for 3 hours. After 15.1 g of fumed silica (AEROSIL 200, produced by NIPPON AEROSIL CO., LTD.) and 228.1 g of water were added to this mixed solution, and agitation was performed for 10 minutes. An aqueous gel was obtained by adding 37 g of morpholine and 42.9 g of triethylamine to the resulting mixed solution and performing agitation for 1.5 hours.

The resulting aqueous gel was charged into a 1-L stainless steel autoclave including a fluororesin internal cylinder, the temperature was raised to a maximum ultimate temperature of 190°C for a temperature raising time of 10 hours while agitation was performed, and was kept at 190°C for 24 hours. After the reaction, cooling was performed, and filtration and washing with water were performed. Subsequently, drying under reduced pressure was performed at 90°C. The resulting dry powder was pulverized to a particle diameter of 3 to 5 $\mu$m and, then, calcining was performed at 750°C in an air stream, so as to remove templates.

The XRD of the thus obtained zeolite was measured. As a result, a CHA structure (framework density = 14.6 T/nm$^3$) was identified.

The average primary particle diameter of the zeolite was 3 $\mu$m, and the abundances of Al, Si, and P atoms in the zeolite, which were expressed in the values of x1, y1, and z1 in Formulae (I) to (III) described above, were x1 = 0.17, y1 = 0.52, and z1 = 0.31.

After 5.0 kg of copper (II) acetate-hydrate (produced by KISHIDA CHEMICAL Co., Ltd.), 2.7 kg of silica sol (PL-1, produced by FUSO CHEMICAL CO., LTD., aggregate sol having an average particle diameter of 15 nm), and 52 kg of pure water were added to 32 kg of the thus obtained zeolite, agitation was performed, so as to produce a water slurry. The resulting water slurry was dried with a spray-drier. The resulting dry powder was calcined at 860°C for 2 hours in an air stream, so as to obtain Catalyst 5. The amount of loaded copper of Catalyst 5 was 4.0 percent by weight.

The resulting Catalyst 5 was subjected to X-ray diffraction measurement. As a result, the ratio of a diffraction peak intensity observed in the range of 21.0 degrees or more and 21.4 degrees or less to a diffraction peak intensity observed in the range of 20.4 degrees or more and 20.8 degrees or less was 0.75.

The X-ray diffraction measurement chart is shown in Fig. 1.

The NO removal factor, the amount of water adsorption, and the amount of NH$_3$ adsorption of Catalyst 5 were examined on the basis of the above-described condition, and the results are shown in Table 4.

[EXAMPLE 6]

A zeolite was synthesized as with Example 5. After 5 kg of copper (II) acetate-hydrate (produced by KISHIDA CHEMICAL Co., Ltd.), 2.7 kg of silica sol (PL-1, produced by FUSO CHEMICAL CO., LTD., aggregate sol having an average particle diameter of 15 nm), and 52 kg of pure water were added to 32 kg of the resulting zeolite, agitation was performed, so as to produce a water slurry. The resulting water slurry was dried with a spray-drier. The resulting dry powder was calcined at 870°C for 2 hours in an air stream, so as to obtain Catalyst 6. The amount of loaded copper of Catalyst 6 was 4.0 percent by weight.

The NO removal factor, the amount of water adsorption, and the amount of NH$_3$ adsorption of Catalyst 6 were examined on the basis of the above-described condition, and the results are shown in Table 4.

[COMPARATIVE EXAMPLE 1]

A zeolite was synthesized as with Example 5. After 3.77 kg of copper (II) acetate-hydrate (produced by KISHIDA CHEMICAL Co., Ltd.), 2.7 kg of silica sol (PL-1, produced by FUSO CHEMICAL CO., LTD., aggregate sol having an average particle diameter of 15 nm), and 52 kg of pure water were added to 32 kg of the resulting zeolite, agitation was performed, so as to produce a water slurry. The resulting water slurry was dried with a spray-drier. The resulting dry powder was calcined at 930°C for 2 hours in an air stream, so as to obtain Catalyst 7. The amount of loaded copper of Catalyst 7 was 3.0 percent by weight.

The NO removal factor, the amount of water adsorption, and the amount of NH$_3$ adsorption of Catalyst 7 were examined on the basis of the above-described condition, and the results are shown in Table 4.

[Table 4]

| | Component composition* | Amount of water adsorption (kg-water/kg-catalyst) | NO removal factor (%) | Amount of NH$_3$ adsorption (mmol/g-catalyst) |
|---|---|---|---|---|
| Example 1 | Cu [4.4%]/zeolite. (50 percent by weight) + SiCO$_2$ (50 percent by weight) | 0.14 | 96 | 0.72 |

(continued)

| | Component composition* | Amount of water adsorption (kg-water/kg-catalyst) | NO removal factor (%) | Amount of NH$_3$ adsorption (mmol/g-catalyst) |
|---|---|---|---|---|
| Example 2 | Cu [4.4%]/zeolite (50 percent by weight) + SiO$_2$ (10 percent by weight) + TiO$_2$ (40 percent by weight) | 0.13 | 95 | 0.63 |
| Example 3 | Cu [4.4%]/zeolite (50 percent by weight) + SiO$_2$ (25 percent by weight) + Al$_2$O$_3$ (25 percent by weight) | 0.15 | 96 | 0.54 |
| Example 4 | Cu [2.4%]/zeolite (50 percent by weight) + quartz powder (50 percent by weight) | 0.12 | 90 | 0.30 |
| Example 5 | Cu [4.0%]/zeolite 860°C × 2h calcining | 0.13 | 97 | 0.51 |
| Example 6 | Cu [4.0%]/zeolite 870°C × 2h calcining | 0.08 | 91 | 0.30 |
| Comparative example 1 | Cu [3.0%]/zeolite 930°C × 2h calcining | 0.01 | 13 | 0.03 |
| *Numerical value in brackets indicates an amount (percent by weight) of copper loaded on zeolite. | | | | |

The present invention has been explained in detail with reference to specific modes. However, it is understood by those skilled in the art that various modifications can be made within the bounds of not departing from the spirit and scope of the present invention.

The present application contains subject matter related to Japanese patent application (Japanese Patent Application 2010-289421) filed on December 27, 2010, which is hereby incorporated by reference herein in its entirety.

**Claims**

1. A catalyst for nitrogen oxide removal, comprising a zeolite and a metal loaded thereon, wherein the zeolite contains at least a silicon atom, an aluminum atom, and a phosphorus atom in a framework structure, and wherein the amount of water adsorption of the catalyst at 25°C and a relative vapor pressure of 0.5 is 0.05 (kg-water/kg-catalyst) or more and 0.2 (kg-water/kg-catalyst) or less.

2. A catalyst for nitrogen oxide removal, comprising a zeolite and a metal loaded thereon, the zeolite having a framework structure which contains at least a silicon atom, an aluminum atom, and a phosphorus atom,
   wherein when an X-ray diffraction measurement by using Cu-K$\alpha$ rays as an X-ray source is performed, the ratio of a diffraction peak intensity observed in the range of diffraction angle (2θ) of 21.0 degrees or more and 21.4 degrees or less to a diffraction peak intensity observed in the range of 20.4 degrees or more and 20.8 degrees or less is 0.2 or more and 1.2 or less.

3. The catalyst for nitrogen oxide removal, according to Claim 1 or 2, wherein Si/(Si + Al + P) (molar ratio) in the framework structure of the zeolite is 0.10 or more.

4. The catalyst for nitrogen oxide removal, according to any one of Claims 1 to 3, wherein the amount of $NH_3$ adsorption measured by the following method is 0.28 mmol/g-catalyst or more.

<Method for measuring amount of $NH_3$ adsorption>

The catalyst is allowed to adsorb ammonia at 200°C until saturation is reached and, thereafter, Gas 1 shown in Table 5 described below is passed to bring about an equilibrium state of a reduction reaction of NO by ammonia. Subsequently, the amount of $NH_3$ adsorption (mmol/g-catalyst) is determined from a total amount of NO reduced when Gas 2 is passed on the basis of the following formula.

$$\text{amount of NH}_3 \text{ adsorption = total amount of NO/catalyst}$$
$$\text{weight (g)}$$

[Table 1]

|  | Gas 1 | Gas 2 |
|---|---|---|
| NO | 350ppm | 350ppm |
| $NH_3$ | 385ppm | 0 |
| $O_2$ | 15 percent by volume | 15 percent by volume |
| $H_2O$ | 5 percent by volume | 5 percent by volume |
| $N_2$ | part other than the above-described components | part other than the above-described components |

5. The catalyst for nitrogen oxide removal, according to any one of Claims 1 to 4, wherein the catalyst comprises metal oxide particles having an average particle diameter of 0.1 to 10 $\mu$m and/or an inorganic binder.

6. The catalyst for nitrogen oxide removal, according to Claim 5, wherein the catalyst comprises metal oxide particles having an average particle diameter of 0.1 to 10 $\mu$m and an inorganic binder.

7. The catalyst for nitrogen oxide removal, according to any one of Claims 1 to 6, wherein the catalyst comprises the zeolite in an amount of 30 to 99 percent by weight.

8. The catalyst for nitrogen oxide removal, according to any one of Claims 1 to 7, wherein the zeolite has a structure of CHA on the cord defined by IZA.

9. The catalyst for nitrogen oxide removal, according to any one of Claims 1 to 8, wherein the loaded metal is copper and/or iron.

10. The catalyst for nitrogen oxide removal, according to any one of Claims 5 to 9, wherein the metal of the metal oxide is at least one selected from the group consisting of aluminum, silicon, titanium, cerium, and niobium.

11. The catalyst for nitrogen oxide removal, according to any one of Claims 5 to 10, wherein the inorganic binder is an aggregate of inorganic oxide sols having an average particle diameter of 5 to 100 nm.

12. A device for nitrogen oxide removal, comprising a honeycomb-shaped product, and the catalyst for nitrogen oxide removal according to any one of Claims 1 to 11 coated on the product.

13. A device for nitrogen oxide removal being formed by molding the catalyst for nitrogen oxide removal according to any one of Claims 1 to 11.

14. A method for manufacturing a catalyst for nitrogen oxide removal, the catalyst comprising a zeolite and a metal loaded thereon,

wherein the method comprises a step of preparing dry powder by drying a mixed slurry containing a metal source, the zeolite, and metal oxide particles having an average particle diameter of 0.1 to 10 $\mu$m and/or an inorganic binder, and a step of calcining the dry powder.

15. The method for manufacturing a catalyst for nitrogen oxide removal according to Claim 14, wherein the dry powder is calcined at a temperature of 400°C or higher in the calcining step.

Fig.1

MEASUREMENT DATA:   MZMN11330-10-110331/Data 1

## INTERNATIONAL SEARCH REPORT

| International application No. |
|---|
| PCT/JP2011/080038 |

**A. CLASSIFICATION OF SUBJECT MATTER**
*B01J29/85*(2006.01)i, *B01D53/94*(2006.01)i, *B01J37/00*(2006.01)i, *B01J37/02*
(2006.01)i, *F01N3/08*(2006.01)i, *F01N3/10*(2006.01)i, *F01N3/28*(2006.01)i

According to International Patent Classification (IPC) or to both national classification and IPC

**B. FIELDS SEARCHED**

Minimum documentation searched (classification system followed by classification symbols)
B01J29/85, B01D53/94, B01J37/00, B01J37/02, F01N3/08, F01N3/10, F01N3/28

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2010/084930 A1 (Mitsubishi Chemical Corp.), 29 July 2010 (29.07.2010), paragraphs [0001], [0026], [0036], [0076], [0107], [0112] to [0114], [0120], [0122], [0143] (Family: none) | 1-15 |
| E,X | JP 2012-24674 A (Mitsubishi Plastics, Inc.), 09 February 2012 (09.02.2012), claims 1, 3 (Family: none) | 1,2,4,8,9 |

☐ Further documents are listed in the continuation of Box C.　　☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　30 March, 2012 (30.03.12) | Date of mailing of the international search report<br>　10 April, 2012 (10.04.12) |
|---|---|
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/080038

**Box No. II** **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III** **Observations where unity of invention is lacking (Continuation of item 3 of first sheet)**

This International Searching Authority found multiple inventions in this international application, as follows:
Document 1: WO 2010/084930 A1 (Mitsubishi Chemical Corp.), 29 July 2010 (29.07.2010)

The invention set forth in claim 1 cannot be considered to be novel in relation to document 1 and hence has no special technical feature. Consequently, the inventions set forth in claims 1-15 do not comply with the requirement of unity of invention. Incidentally, the inventions relating to claim 1 and that part of claims 3-13 in which claim 1 is cited are the main invention.

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/080038

Continuation of Box No.III of continuation of first sheet(2)

The invention set forth in claim 1 and the invention set forth in claim 2 have a technical feature common therebetween that is a catalyst for nitrogen oxide removal which comprises a zeolite loaded with a metal and in which the zeolite has a framework structure that contains at least silicon atoms, aluminum atoms, and phosphorus atoms. The invention set forth in claim 1 and the invention set forth in claim 14 have a technical feature common therebetween that is a catalyst for nitrogen oxide removal which comprises a zeolite loaded with a metal. However, that technical feature is known (see document 1), and the invention set forth in claim 1, the invention set forth in claim 2, and the invention set forth in claim 14 cannot be considered to have the same or corresponding special technical features in the meaning of the second sentence of PCT Rule 13.2.

Therefore, in this meaning also, it is considered that (1) the inventions relating to claim 1 and that part of claims 3-13 in which claim 1 is cited, (2) the inventions relating to claim 2 and that part of claims 3-13 in which claim 2 is cited, and (3) the inventions relating to claim 14 and claim 15 neither constitute a single invention nor are a group of inventions linked so as to form a single general inventive concept.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 251246 A
- JP 2251246 A
- JP H11147041 A
- JP 11147041 A
- WO 2008118434 A
- WO 2008132452 A
- WO 2009099937 A
- WO 2010084930 A
- JP 2003183020 A
- JP H437007 A
- JP 2037007 A
- JP H521844 B
- JP 5021844 B
- JP H551533B B
- JP 5051533 B
- US 4440871 A
- JP 2010289421 A

### Non-patent literature cited in the description

- **ISHIHARA.** *Journal of catalysis,* 1997, vol. 169, 93-102